Europäisches Patentamt

European Patent Office

Office européen des brevets

(19)

(11) **EP 0 920 600 B1**

(12) **EUROPEAN PATENT SPECIFICATION**

(45) Date of publication and mention
of the grant of the patent:
**23.07.2003 Bulletin 2003/30**

(21) Application number: **97938305.6**

(22) Date of filing: **14.08.1997**

(51) Int Cl.[7]: **G01B 9/02**

(86) International application number:
**PCT/US97/14318**

(87) International publication number:
**WO 98/008214 (26.02.1998 Gazette 1998/08)**

(54) **SUPERHETERODYNE INTERFEROMETER AND METHOD FOR COMPENSATING THE REFRACTIVE INDEX OF AIR USING ELECTRONIC FREQUENCY MULTIPLICATION**

SUPERHETERODYN-INTERFEROMETER UND VERFAHREN ZUR KOMPENSATION DES BRECHUNGSINDEXES VON LUFT MITTELS ELEKTRONISCHER FREQUENZMULTIPLIKATION

INTERFEROMETRE SUPERHETERODYNE ET PROCEDE CORRESPONDANT PERMETTANT DE COMPENSER L'INDICE DE REFRACTION DE L'AIR EN FAISANT INTERVENIR UNE MULTIPLICATION ELECTRONIQUE DE FREQUENCE

(84) Designated Contracting States:
**DE NL**

(30) Priority: **20.08.1996 US 700112**
**27.06.1997 DE 19727404**

(43) Date of publication of application:
**09.06.1999 Bulletin 1999/23**

(73) Proprietor: **ZYGO CORPORATION**
**Middlefield Connecticut 06455-0448 (US)**

(72) Inventors:
• **HILL, Henry, Allen**
**Tucson, AZ 85716 (US)**
• **DE GROOT, Peter**
**Middletown, CT 06457 (US)**

(74) Representative: **Cole, David John**
**Executive Liaison Services,**
**43 Mount Felix**
**Walton-on-Thames, Surrey KT12 2PJ (GB)**

(56) References cited:
**US-A- 5 404 222**

• **JAPANESE JOURNAL OF APPLIED PHYSICS, March 1989, Vol. 28(3), ISHIDA A., "Two-Wavelenght Displacement-Measuring Interferometer Using Second-Harmonic Light to Eliminate Air-Turbulence-Induced Errors", pages 587-589.**

**Description**

CROSS REFERENCE TO RELATED APPLICATION

This application is related to the contemporaneously filed, commonly owned, copending United States patent application by H. A. Hill and P. de Groot entitled "Superheterodyne Method and Apparatus for Measuring the Refractive Index of Air Using Multiple-Pass Interferometry" , US-A- 5 764 362 published 9,6,98.

**FIELD OF THE INVENTION**

The present invention relates to optical instruments for measuring distance and refractive index. The invention relates in particular to interferometric distance measurement independent of fluctuations in the refractive index of a gas in a measurement path.

**BACKGROUND AND PRIOR ART**

A frequently-encountered problem in metrology is the measurement of the refractive index of a column of air. Several techniques exist for measuring the refractive index of air under highly controlled circumstances, such as when the air column is contained in a sample cell and is monitored for temperature, pressure and physical dimension. See for example, an article entitled "An air refractometer for Interference length metrology," by J. Terrien, Metrologia $\underline{1}$(3), 80-83 (1965).

Perhaps the most difficult measurement related to the refractive index of air is the measurement of index fluctuations over a measurement path of unknown or variable length, with uncontrolled temperature and pressure. Such circumstances arise frequently in geophysical and meteorological surveying, for which the atmosphere is obviously uncontrolled and the refractive index of air is changing dramatically because of variations in air density and composition. This problem is discussed in an article entitled "Effects of the atmospheric phase fluctuation on long-distance measurement," by H. Matsumoto and K. Tsukahara, Appl. Opt. $\underline{23}$(19), 3388-3394 (1984), and in an article entitled "Optical path length fluctuation in the atmosphere," by G. N. Gibson et al., Appl. Opt. $\underline{23}$(23), 4383-4389 (1984).

Another example of the problem encountered In measuring the refractive index of air is high-precision distance measuring interferometry, such as is employed in the micro-lithographic fabrication of integrated circuits. See for example an article entitled "Residual errors in laser interferometry from air turbulence and non-linearity," by N. Bobroff, Appl. Opt. $\underline{26}$(13), 2676-2682 (1987), and an article entitled "Recent advances in displacement measuring interferometry," also by N. Bobroff, Measurement science & tech. $\underline{4}$(9), 907-926 (1993). Typically the correction for fluctuations in the refractive index of air is on the order of 0.1 ppm (parts per million) in magnitude, and must be accurate to 0.005ppm. These high levels of precision involve frequency-stabilized laser sources and high-resolution phase detection.

There are frequent references in the prior art to heterodyne methods of phase estimation, in which the phase varies with time in a controlled way. For example, In a known form of prior-art heterodyne distance-measuring interferometer, the source emits two orthogonal polarizations having slightly different optical frequencies (e.g. 2MHz). The interferometric receiver in this case is typically comprised of a linear potarizer and a photodetector to measure the time-varying interference signal. The signal oscillates at the beat frequency, and the phase of the signal corresponds to the relative phase difference. A further representative example of the prior art in heterodyne distance-measuring interferometry is disclosed In commonly-owned U.S. Patent No.4,688,940 to G. E. Sommargren and M. Schaham (1987). However, these known forms of interferometric metrology are limited by fluctuations in refractive index, and, by themselves, are unsuited to the next generation of microlithography Instruments.

Another known form of Interferometer for distance measurement is disclosed in U.S. Patent No.4,005,936 entitled "Interferometric methods and apparatus for measuring distance to a surface' to J. D. Redman and M. R. Wall (1977). The prior art method taught by Redman and Wall consists of employing laser beams of two different wavelengths, each of which is split into two parts. Frequency shifts are introduced into one part of the respective beams. One part of each beam reflects from an object and recombines with the other part on a photodetector to produce an interference signal. From this interference signal a difference frequency is derived whose phase is a measure of the distance to the surface. The equivalent wavelength of the phase associated with the difference frequency is equal to the product of the two laser wavelengths divided by the difference of the two wavelengths. This prior art two-wavelength technique of Redman and Wall reduces measurement ambiguities, but is at least as sensitive to the deleterious effects of index fluctuations of the air as prior art single-wavelength techniques.

Another example of a prior art two-wavelength interferometer similar to that of Redman and Wall is disclosed in US-A-4 907 886 entitled "Method and apparatus for two-wavelength interferometry with optical heterodyne processes and use for position or range finding." This prior art system is also described in an article entitled "Two-wavelength

2

laser interferometry using superheterodyne detection," by R. Dandliker, R. Thalmann, and D. Prongué, Opt. Let. 13 (5), 339-341 (1988) and in an article entitled "High-accuracy distance measurements with multiple-wavelength interferometry,' by R. Dandliker, K. Hug, J. Politch and E. Zimmermann. The system of Dandliker et al., as taught in US-A-4 907 886 employs laser beams of two wavelengths, with each of these beams comprising two polarization components separated in frequency by means of acousto-optic modulation. After passing these beams collinearly through a Michelson interferometer, the polarization components are mixed, resulting in a heterodyne signal. Since the heterodyne signal has a different frequency for each of the two wavelengths, a so-called super-heterodyne signal results therefrom, having a frequency equal to the difference in the heterodyne frequencies, and a phase associated with an equivalent wavelength equal to the product of the two laser wavelengths divided by the difference of the two wavelengths. According to U.S. Patent No.4.907,886, the phase of this super-heterodyne signal is assumed to be dependent only on the position of a measurement object and the equivalent wavelength. Therefore, this prior art system Is also not designed to measure or compensate for the fluctuations in the index of air.

Further examples of the prior art two-wavelength superheterodyne technique developed by Redman and Wall and by Dändliker and Heerburgg (cited above) are found in an article entitled Two-wavelength double heterodyne interferometry using a matched grating technique," by Z. Sodnik, E. Fischer, T. Ittner and H. J. Tiziani, Appl. Opt. 30 (22), 3139-3144 (1991) and in an article entitled 'Diode laser and fiber optics for dual-wavelength heterodyne interferometry," by S. Manhart and R. Maurer, SPIE 1319, 214-216 (1990). However, neither one of these examples addresses the problem of index fluctuations.

Thus, as illustrated by the foregoing examples, the prior art in heterodyne and super-heterodyne interferometry does not provide a satisfactory method and corresponding means for measuring and compensating the fluctuation of the refractive index of air. This deficiency In the prior art results in significant measurement uncertainty, thus seriously affecting the precision of systems employing such interferometers, for example in micro-lithographic fabrication of integrated circuits. Consequently, future interferometers will necessarily have to incorporate an inventive, new method and means for measuring and compensating for refractive index fluctuations.

One known way to detect index fluctuations is to measure changes in pressure and temperature along the measurement path and calculate the effect on the refractive Index of path. Mathematical equations for effecting this calculation are well known, such as disclosed in an article entitled "The refractivity of air," by F. E. Jones, J. Res. NBS 86(1), 27-32 (1981). An implementation of this prior art technique is described in an article entitled "High-accuracy displacement interferometry in air," by W. T. Estler, Appl. Opt. 24(6), 808-815 (1985). Unfortunately, this prior art technique is also unsatisfactory in that it provides only approximate values, is cumbersome, and corrects only for slow, global fluctuations in air density.

Another, more direct way to detect Index fluctuations over a path is by multiple-wavelength distance measurement. The basic principle may be understood as follows. interferometers and laser radar measure the optical path length between a reference and an object, most often in open air. The optical path length is the integrated product of the refractive index and the physical path traversed by the measurement beam. In that the refractive index varies with wavelength, but the physical path is Independent of wavelength, It is generally possible to separate the physical path length from the fluctuations in refractive index, provided that the instrument employs at least two wavelengths. The variation of Index with wavelength is known in the art as dispersion, therefore this technique will be referred to hereinafter as the dispersion technique.

The prior art dispersion technique for index measurement has a long history, and predates the introduction of the laser. An article entitled "Long-path interferometry through an uncontrolled atmosphere,* by K E. Erickson (J. Opt. Soc. Am. 52(7), 781-787 (1962)) describes the basic principles and provides an analysis of the feasibility of this prior art technique for geophysical measurements. Additional theoretical proposals are found in an article entitled "Connection of optical distance measurements for the fluctuating atmospheric index of refraction," by P. L Bender and J. C. Owens (J. Geo. Res. 70(10), 2461-2462 (1965)).

Commercial distance-measuring laser radar based on this prior art dispersion technique for Index compensation appeared In the 1970's. An article entitled "Two-laser optical distance-measuring instrument that corrects for the atmospheric Index of refraction," by K. B. Eamshaw and E. N. Hemandez, Appl. Opt. 11(4), 749-754 (1972), discloses a prior art instrument employing microwave-modulated HeNe and HeCd lasers for operation over a 5 to 10-km measurement path. Further details of this instrument are found in an article entitled "Field Tests of a two-laser (4416A and 6328A) optical distance-measuring instrument correcting for the atmospheric index of refraction," by E. N. Hemandez and K. B. Eamshaw, J. Geo. Res. 77(35), 6994-6998 (1972). Further examples of applications of the dispersion technique are discussed in an article entitled "Distance corrections for single- and dual-color lasers by ray tracing," by E. Berg and J. A. Carter, J. Geo. Res. 85(B11), 6513-6520 (1980), and in an article entitled "A multi-wavelength disiance-measuring instrument for geophysical experiments," by L. E. Slater and G. R. Huggett, J. Geo. Res. 81(35), 6299-6306 (1976).

Although prior art instrumentation for geophysical measurements typically employs intensity-modulation laser radar, it is understood in the art that optical interference phase detection is more advantageous for shorter distances.

In U.S. Patent No.3,647,302 to R. B. Zipin and J. T. Zalusky, entitled "Apparatus for and method of obtaining precision dimensional measurements," there Is disclosed a prior art interferometric displacement-measuring system employing multiple wavelengths to compensate for variations in ambient conditions such as temperature, humidity and pressure. This prior art instrument is specifically designed for operation with a movable object, that is, with a variable physical path length; however, the prior art phase-detection means of Zipin and Zalusky is insufficiently accurate for high-precision measurement.

A more modem and detailed example of a prior art technique for index measurement is the system described by Y. Zhu, H. Matsumoto, T. O'ishi in an article entitled "Long-arm two-color interferometer for measuring the change of air refractive index," SPIE 1319, Optics in complex systems, 538-539 (1990). This system employs a 1064-nm wavelength YAG laser and an 632-nm HeNe laser together with quadrature phase detection. Substantially the same prior art instrument Is described in Japanese in an earlier article by Zhu et al. entitled "Measurement of atmospheric phase and intensity turbulence for long-path distance interferometer," Proc. 3rd meeting on lightwave sensing technology, Appl Phys. Soc. of Japan, 39 (1989); however, the prior art interferometer of Zhu et at. described in these articles has insufficient resolution for all applications, such as, for example, in sub-micron prior art interferometry for microlithography.

A recent attempt at high-precision interferometry for use in microlithography is represented by the approach described in U.S. Patent No.4,948,254 to A. Ishida. A similar prior art device is also described by Ishida in an article entitled "Two wavelength displacement-measuring interferometer using second-harmonic light to eliminate air-turbulence-induced errors," Jpn. J. Appl. Phys. 28(3), L473-475 (1989). A displacement-measuring interferometer is disclosed in this article which eliminates errors caused by fluctuations in the refractive index by means of two-wavelength dispersion detection. An Ar* laser source provides both wavelengths simultaneously by means of a frequency-doubling crystal known in the art as BBO. The use of a BBO doubling crystal results in two wavelengths that are fundamentally phase locked, thus greatly Improving the stability and accuracy of the refractive index measurement; however, the phase detection means, which employ simple homodyne quadrature detection, are insufficient for high resolution phase measurement. Further, the phase detection and signal processing means are not suitable for dynamic measurements, in which the motion of the object results in rapid variations in phase that are difficult to detect accurately.

U.S. Patent No.5,404,222 entitled "Interferometric measuring system with air turbulence compensation" to S. A. Lis (1995), discloses another prior art technique employing a two-wavelength interferometer and the dispersion technique for detecting and compensating index fluctuations. A similar device prior art is described by Lis In an article entitled "An air turbulence compensated interferometer for IC manufacturing, SPIE 2440 (1995). Improvement on U. S. Patent No. 5,404,222 by S. A. Lis is disclosed in U. S. Patent No. 5,537,209 issued July 1996. The principle innovation of this system with respect to that taught by Ishida in Jpn. J. Appl. Phys. (cited above) is the addition of another BBO doubling crystal to improve the precision of the phase detection means. The additional BBO crystal makes it possible to optically Interfere two beams having wavelengths that are exactly a factor of two different. The resultant interference has a phase that is directly dependent on the index of refraction but is substantially independent of stage motion; however, the prior art system taught by Us has the disadvantage that it is complicated and requires an additional BBO crystal for every measurement path. Since microlithography stages frequently involve six or more measurement paths, and BBO can cost more than $12,000, the use of such additional crystals are a significant cost burden. An additional disadvantage of Lis' system is that it employs a low-speed (32-Hz) phase detection system based on the physical displacement of a PZT transducer.

It is clear to applicants from the foregoing, that the prior art does not provide a practical, high-speed, high-precision method and corresponding means for measuring and compensating fluctuations in the refractive index of air. The limitations In the prior art arise principally from the following, unresolved technical difficulties: (1) prior-art heterodyne and superheterodyne interferometers are limited in accuracy by fluctuations in the refractive index of air; (2) prior-art dispersion techniques for measuring index fluctuations require extremely high accuracy in interference phase measurement, typically exceeding by an order of magnitude the typical accuracy of high-precision distance-measuring interferometers; (3) obvious modifications to prior-art interferometers to improve phase-measuring accuracy would increase the measurement time to an extent incompatible with the rapidity of stage motion in modem microlithography equipment; (4) prior-art dispersion techniques require at least two extremely stable laser sources, or a single source emitting multiple, phase-locked wavelengths; (5) prior-art dispersion techniques in microlithography applications are sensitive to stage motion during the measurement, resulting In systematic errors; and (6) prior-art dispersion techniques that employ doubling crystals such as disclosed in U.S. Patent No.5,404,222 to Lis as part of the detection system are expensive and complicated.

These deficiencies in the prior art which are overcome by the present invention, have lead to the absence of any practical interferometric system for performing displacement measurement for microlithography in the presence of index fluctuations.

In accordance with the present invention independant claims 1,17 and prior art US-A-5404222, there is provided an apparatus for measuring fluctuations in the refractive index of a gas in a measurement path, the apparatus comprising: a source of at least two light beams having different wavelengths and a substantially harmonic relationship, the light beams each having orthogonal polarization states; means for introducing a frequency difference between the orthogonal polarization states of each of the light beams; means for aligning the light beams into a single substantially collinear beam along the same measurement path; and means for producing phase shifted beams having phase shift magnitudes proportional to a product of the physical length of the measurement path and the indices of refraction of the gas in the measurement path. The apparatus of the invention is characterized by means for mixing the polarization components of each of the phase shifted beams for producing mixed output beams; means for producing heterodyne electrical signals from the intensities of the mixed output beams which comprise oscillations at heterodyne frequencies related to the frequency differences between the polarization states of the light beams and comprising heterodyne phases, means for generating modified heterodyne signals from the heterodyne electrical signals which comprise modified heterodyne frequencies harmonically related to said heterodyne frequencies and modified heterodyne phases harmonically related to said heterodyne phases; means for mixing at least two of the modified heterodyne electrical signals for producing at least one superheterodyne electrical signal comprising a superheterodyne modulation frequency substantially equal to half the difference of the two corresponding modified heterodyne frequencies and a superheterodyne modulation phase substantially equal to half the difference between the two corresponding modified heterodyne phases; and means for analyzing the superheterodyne modulation phase for determining the fluctuations in the refractive index over the measurement. This apparatus (and the method defined below) are useful for distance measuring interferometry independent of the aforementioned fluctuations.

This invention also provides a method for measuring fluctuations in the refractive index of a gas in a measurement path comprising the step of providing source light beams having source wavelengths which are substantially harmonically related to each other. The method of the invention is characterized by providing modified heterodyne phase shifts based on the source wavelengths, the phase shifts being similarly harmonically related to the harmonically related source wavelengths for providing a superheterodyne modulation phase substantially insensitive to motion along the measurement path.

The principal advantages of the invention may be summarized as follows. When the source wavelengths are substantially harmonically related and the modified heterodyne phase shifts are similarly harmonically related, the present invention provides a superheterodyne modulation phase that is substantially insensitive to stage motion. The superheterodyne modulation phase is a direct measure of fluctuations in the refractive index of air. Since the superheterodyne modulation frequency may be adjusted to any convenient value, the phase-measurement accuracy for compensating index fluctuations may be appropriately enhanced. These improvements over the prior art are conveniently achieved without expensive optical components such as doubling crystals or the like, and without placing any restriction on the rapidity of stage motion.

An alternative embodiment of the invention includes the ability to compensate for unexpected fluctuations in the source wavelength, using additional monitor interferometer means and substantially the same electronic processing means as are employed in the primary apparatus. The monitor interferometer preferably comprises a fixed monitor path length having a carefully controlled refractive index, so that any measured variations in the monitor are attributable to and provide a measure of the wavelength stability.

## BRIEF DESCRIPTION OF THE DRAWINGS

In the drawings, wherein like reference characters denote similar elements throughout the several views:

**Fig. 1** is a drawing showing a preferred embodiment of the present invention;

**Fig. 2** is graph depicting a superheterodyne signal in accordance with the present invention;

**Fig. 3** is a drawing showing a block diagram of the processing electronics employed In the present invention;;

**Fig. 4** is a drawing showing an alternative embodiment of the present invention.

## DETAILED DESCRIPTION OF THE INVENTION

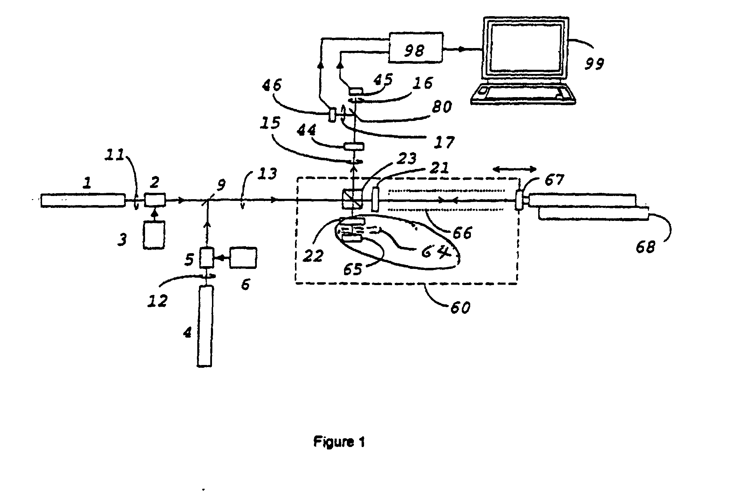

Referring initially to Figure 1, there is shown a presently preferred embodiment of the apparatus for the present invention measuring fluctuations in the refractive index of a gas in a measurement path 66, such as is useful for measuring the displacement of an object 67 independent of these fluctuations.

In accordance with a presently preferred method of the present invention, in a first step, a light beam 11 emitted from a source 1 passes through a modulator 2 excited by a driver 3. Source 1 is preferably a laser or like source of coherent radiation, preferably polarized, and having a wavelength $\lambda_1$. Modulator 2 may for example be an acousto-optic device or a combination of an acousto-optic device with additional optics for selectively modulating polarization components of beam 11. Modulator 2 preferably shifts the oscillation frequency of one linear polarization component of beam 11 an amount $f_1$ with respect to an orthogonal linear polarization component, with the polarization components being denoted herein as $x$ and $y$, respectively. Therefore, after passing through modulator 2, polarization component $x$ of beam 11 has an oscillation frequency shifted upwards an amount $f_1$ with respect to polarization component $y$ of beam 11.

In a next step, a light beam 12 emitted from a source 4 passes through a modulator 5 excited by a driver 6, similar to modulator 2 and driver 3, respectively. Source 4, similarly to source 1, is preferably a laser or like source of polarized, coherent radiation, but preferably at a different wavelength, $\lambda_2$, having a known approximate harmonic relationship with respect to $\lambda_1$, such as

$$p_1\lambda_2 \approx p_2\lambda_1 \text{ for } p_1, p_2 \approx 1,2,3,...p_1 \neq p_2 \qquad (1.)$$

After passing through modulator 5, polarization component $x$ of beam 12 has an oscillation frequency shifted upwards an amount $f_2$ with respect to polarization component $y$ of beam 12.

It will be appreciated by those skilled in the art that beams 11 and 12 may be provided alternatively by a single laser source emitting more than one wavelength, or by a single laser source combined with optical frequency doubling means, or any equivalent source configuration capable of generating light beams of two or more wavelengths. It will also be appreciated by those skilled in the art that one or both of the frequency shifts $f_1$, $f_2$ may be the result of Zeeman splitting or like phenomena characteristic of the laser sources themselves.

In a next step, beams 11 and 12 are combined into a test beam 13 by an optical element 9, which is preferably a non-polarizing beam splitter. In a further step, test beam 13 propagates to an interferometer 60, comprised of optical means for a introducing a phase shift $\varphi_1$ between the polarization components $x$ and $y$ of beam 13 corresponding to wavelength $\lambda_1$ and a phase shift $\varphi_2$ between the polarization components $x$ and $y$ of beam 13 corresponding to wavelength $\lambda_2$. The magnitude of phase shifts $\varphi_1$, $\varphi_2$ are related to the physical length L of measurement path 66 according to the formulae

$$\varphi_j = Lk_jn_j + \zeta_j, \qquad for\ j = 1,\ 2, \qquad (2.)$$

where the wavenumbers $k_1$ are given by

$$k_j = 2\pi/\lambda_j \qquad (3.)$$

and the indices of refraction $n_j$ of the gas in measurement path 66 correspond to wavelengths $\lambda_j$. The phase offsets $\zeta_j$ comprise all contributions to the phase shifts $\varphi_j$ that are not related to the measurement path 66.

As shown and preferred in Figure 1, interferometer 60 is comprised of a reference mirror 65, a quarter-wave plate 21, a quarter-wave plate 22, a polarizing beam splitter 23 and object 67 connected to a motion stage 68, or the like, by which object 67 may be moved to alter measurement path 66. This configuration is known in the art as a polarized Michelson interferometer, and is shown as a simple illustration. An angle-compensating interferometer or similar device such as is described in an article entitled Differential interferometer arrangements for distance and angle measurements: Principles, advantages and applications," by C. Zanoni (VDI Berichte Nr. 749, p. 93, 1989), is preferably incorporated into the apparatus of the invention when working with stages commonly encountered in the micro-lithographic fabrication of integrated circuits. Other forms of interferometer known in the art as described in the above-cited article 'Differential interferometer arrangements for distance and angle measurements: Principles, advantages and applications.* by C. Zanoni (VDI Berichte Nr. 749, p.93, 1989), may be incorporated into the apparatus of figure 1 without significantly departing from the spirit and scope of the present invention.

After passing through interferometer 60, test beam 13 becomes a phase-shifted beam 15, which passes through a polarizer 44 preferably oriented so as to mix polarization components $x$ and $y$ of beam 15. A conventional dichroic beam splitter 80 preferably separates those portions of beam 15 corresponding to wavelengths $\lambda_1$ and $\lambda_2$ into two beams 16, 17 respectively. Beams 16,17 then Impinge upon a photodetectors 45, 48 respectively resulting in two heterodyne interference signals $s_1$, $s_2$ corresponding to the two wavelengths $\lambda_1$, $\lambda_2$, and having the form

$$s_j = \cos[\alpha_j(t)], \quad for \quad j=1,2, \qquad (4.)$$

where the time-dependent arguments $\alpha_1(t)$, $\alpha_2(t)$ of heterodyne interference signals $s_1$, $s_2$ are given by

$$\alpha_j(t) = 2\pi f_j t + \varphi_j \qquad (5.)$$

and the signal amplitude has been normalized to one and any constant offset values have been filtered out by conventional electronic pre-processing means (not shown). Heterodyne interference signals $s_1$, $s_2$ are transmitted to electronic processing means 98 for analysis.

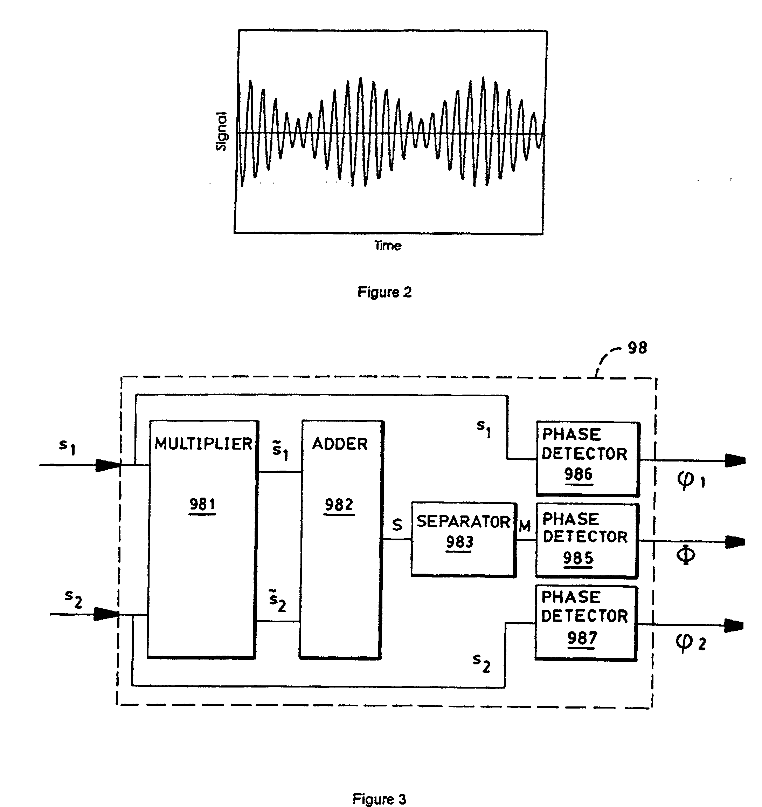

Reterring now to Figure 3, electronic processing means 98 preferably comprises means 981 for electronically multiplying time-dependent arguments $\alpha_1(t),\alpha_2(t)$ of heterodyne interference signals $s_1$, $s_2$ by coefficients $p_1,p_2$, respectively, so as to create two modified heterodyne signals $\tilde{s}_1,\tilde{s}_2$ having the form

$$\tilde{s}_j = \cos\left[p_j \alpha_j(t)\right], \qquad \text{for} \qquad j=1,2. \qquad (6.)$$

The multiplication may be achieved by any one of the conventional frequency multiplying techniques commonly known In the art, such as signal squaring followed by electronic filtering. It will be understood by those skilled in the art that such electronic multiplying techniques may introduce offsets and modifications in signal strength that may be neglected In the present, simplified description of the analysis technique of the present invention. It is noteworthy that the coefficients $p_1,p_2$ are preferably identical to the like-denoted coefficients $p_1,p_2$ used to define the approximate harmonic relationship in Eq.(1).

Referring again to Figure 3, electronic processing means 98 preferably comprises means 982 for electronically adding two modified heterodyne signals $\tilde{s}_1,\tilde{s}_2$ together to create a superheterodyne signal $S$ having the mathematical form

$$S = \tilde{s}_1 + \tilde{s}_2 \qquad (7.)$$

which may be rewritten as

$$S = 2MC \qquad (8.)$$

where

$$C = \cos(2\pi vt + \theta) \qquad (9.)$$

$$M = \cos(2\pi Ft + \Phi) \qquad (10.)$$

and

$$\upsilon = \tfrac{1}{2}\,(p_1 f_1 + p_2 f_2) \qquad (11.)$$

$$\theta = \tfrac{1}{2}\,(\varphi_1 + \varphi_2)$$

$$F = \tfrac{1}{2}\,(p_1 f_1 - p_2 f_2) \qquad (12.)$$

7

$$\Phi = \tfrac{1}{2}\,(\varphi_1 - \varphi_2)$$

Superheterodyne signal $S$ is therefore a carrier signal $C$ of frequency V modulated by an envelope signal M of frequency $F$. Those skilled in the art will appreciate that when modified heterodyne signals $s_1, s_2$ are of different amplitude, the resulting mathematical expression is more complicated, but nonetheless may be described in terms of a carrier signal modulated by an envelope signal. For simplicity in the present disclosure, it is assumed that modified heterodyne signals $s_1, s_2$ have the same amplitude.

Referring once again to Figure 3, electronic processing means 98 preferably comprises a means 983 to separate envelope signal M from carrier signal C, using rectification and filtering, signal squaring, or any of the like techniques for extracting an amplitude modulation and demodulating a carrier. Electronic processing means 98 further comprises a means 985 to determine the modulation phase $\Phi$ using conventional time-based phase detection or the like. Electronic processing means 98 additionally comprises a means 986 and a means 987 to determine the phases $\varphi_1$ and $\varphi_2$ respectively. In a next step, electronic processing means 98 transmits to a computer 99, in either digital or analog format, the values of modulation phase $\Phi$ and phase shifts $\varphi_1$, $\varphi_2$. Computer 99 calculates the carrier phase $\vartheta$ and calculates the refractive index using the formula

$$n_1 = 1 + \frac{A}{L}(K\vartheta - \chi\Phi - Q), \tag{13.}$$

where

$$A = \frac{2\Gamma}{(\chi^2 - K^2)}, \tag{14.}$$

$$K = \frac{1}{2}(p_1 k_1 - p_2 k_2) \tag{15.}$$

$$\chi = \frac{1}{2}(p_1 k_1 + p_2 k_2) \tag{16.}$$

$$\Gamma = \frac{n_1 - 1}{n_2 - n_2} \tag{17.}$$

Constant $\Gamma$, defined above, is a measure of the dispersion of the refractive index of air. For example, if $\lambda_1 = 0.63\mu m$ and $\lambda_2 = 0.33\mu m$, then $\Gamma = 24$. The offset factor $Q$ is defined as

$$Q = K\xi - \chi Z, \tag{18.}$$

where

$$\xi = \frac{1}{2}(p_1 \zeta_1 + p_2 \zeta_2) \tag{19.}$$

$$Z = \frac{1}{2}(p_1 \zeta_1 - p_2 \zeta_2). \tag{20.}$$

For the presently-preferred embodiment of the invention, $Q$ is considered a constant, or is monitored by purely electronic means (not shown).

The quantities $K$ and $\chi$ introduced in Eqs. (15, 16) respectively will be referred to as the vacuum superheterodyne wavenumber and the vacuum carrier wavenumber, respectively. This terminology follows logically from the following two phase equations, which are valid when $n_1 = n_2 = 1$:

$$\vartheta = \chi L + \xi \tag{21.}$$

$$\Phi = KL + Z \tag{22.}$$

For the same reason, the quantities $\xi$ and $Z$ introduced in Eqs. (19, 20) will be referred to as the vacuum carrier phase offset and the vacuum superheterodyne phase offset, respectively.

In a final step, for those applications related to distance measuring interferometry, the calculated value of refractive index $n_1$ together with the phase shift $\varphi_1$ may be used to determine the distance L independent of fluctuations in refractive index $n_1$, using the formula

$$L = (\varphi_1 - \zeta_1)/p_1 k_1 n_1 \tag{23.}$$

It would also be obvious to someone skilled in the art to perform similar calculations with respect to $n_2$ in place of or in addition to $n_1$.

A preferred embodiment of the present invention having been disclosed in the previous paragraphs, the underlying advantages of the present invention will be made more clear by the following discussion. It is evident from the calculation of the refractive index $n_1$ provided by the above equation that the required accuracies of the carrier phase $\theta$ and the superheterodyne phase $\Phi$ are related to the values of the carrier wavenumber $\chi$ and the superheterodyne wavenumber $K$. Since the frequency $F$ of the modulation signal M can be very much smaller than the frequency $\upsilon$ of carrier signal $C$, and since it is generally easier to calculate the phase with high resolution of an electronic signal of lower frequency, it is generally most advantageous to rely on a high-accuracy measurement of the superheterodyne modulation phase $\Phi$. This is readily achieved in the apparatus of the present invention when the wavelengths $\lambda_1$, $\lambda_2$ are approximately harmonically related, as shown above in the first equation. For the limit case where $\lambda_1$, $\lambda_2$ are integer multiples of each other, i.e. for the limit case where

$$p_1 \lambda_1 \approx p_2 \lambda_1 \; for \; p_1, p_2 = 1, 2, 3, ..., p_1 \neq p_2 \tag{24.}$$

the vacuum superheterodyne wavenumber K is equal to zero and the refractive index calculation does not involve the carrier phase $\theta$ at all as illustrated by the following expression:

$$n_1 = 1 + \frac{A}{L}(\chi\Phi - Z) \text{ for } K=0. \tag{25.}$$

Further, for the case where $K$=0, the superheterodyne modulation phase $\Phi$ is also only weakly dependent upon the distance $L$, relative to the very strong dependence of the carrier phase $\vartheta$ and of the phase shifts $\varphi_1$, $\varphi_2$. This greatly Improves the phase detection accuracy for moving objects, such as are commonly encountered in microlithography equipment.

An important consideration for interferometry in general and for dispersion techniques in particular is source wavelength instability. The apparatus of the present invention provides a convenient way of compensating for source wavelength Instability as follows. By mathematical manipulation of Eq. (13), It is possible to show that an error $\delta n_1$ in refractive index attrtbutable to source wavelength instability Is given by

$$\delta n_1 = \chi \, A\delta K. \tag{26.}$$

where $\delta K$ is the instability In the vacuum superheterodyne wavenumber $K$. This formula shows that the magnitude of the error is substantially independent of the object distance $L$, and of all other variables such as the phase shifts $\varphi_1$, $\varphi_2$ that depend directly on the object distance $L$. It is therefore possible to compensate for the effects of wavelength stability by measuring the index of refraction along a monitor path that is entirely free of real fluctuations in index. Any measured variations are the result of wavelength instability.

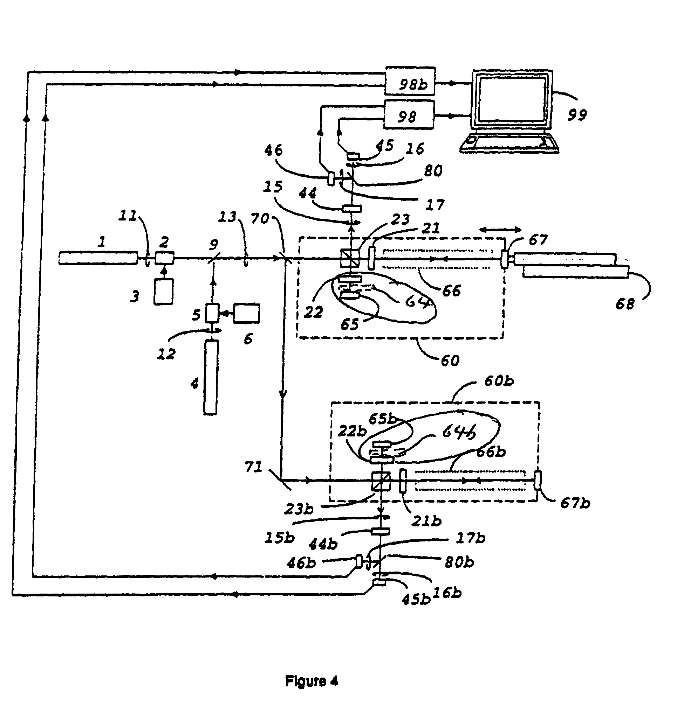

Referring now to Figure 4, there is shown an alternative embodiment of the present invention in which a monitor system 60b has been added to the embodiment of Figure 1 for the purpose of compensating for an error $\delta n_1$ in refractive index measurement attributable to source wavelength instability. A beam splitter 70 and a mirror 71 reflect a portion of beam 13 towards monitor system 60b. Monitor system 60b comprises a number of elements performing analogous operations as interferometer 60, with elements performing like operations as like denoted elements as interferometer 60, apart from the sutfut "b" when referring to elements of monitor system 60b. A monitor electronic processing system 98b similarly performs like operations as electronic processing system 98. The difference between interferometer 60 and monitor system 60b is that monitor path 66b of monitor system 60b Is preferably a fixed length. with a carefully controlled refractive index, such as may be achieved by enclosing monitor path 66b and controlling the temperature and pressure of the enclosed volume. In that the refractive index along monitor path 66b is substantially constant, any measured variations $\delta n_M$ in the monitor system are attributable to source wavelength instability. For this alternative embodiment of the present invention, computer 99 preferably calculates refractive index $n_1$ according to the formula

$$n_1 = 1 + \frac{A}{L}(K\vartheta - \chi\Phi - Q) - \delta n_M, \tag{27.}$$

This preferred compensation technique of the present invention greatly reduces the wavelength stability requirements for the source. It is particularly noteworthy that the present invention does not require absolute wavelength stability, and a monitor path 66b need not have an extraordinarily stable physical length *L*.

The advantages of the present invention are: (1) the present invention provides accurate measurement of and compensation for fluctuations in the refractive index of air, such as is useful for distance measuring interferometry; (2) the present invention is compatible with the rapid stage motion common to modem microlithography equipment; (3) the present invention optionally comprises easily-incorporated monitor means and method to substantially reduce source stability requirements; and (4) the apparatus of the present invention is substantially less complicated and expensive relative to comparable prior art.

It will be appreciated by those skilled in the art that alternative data processing may be considered without departing from the spirit and scope of the present invention, such as for example, it may prove useful to multiply modified heterodyne signals[i,i] together rather than adding them, as was proposed above resulting In the expression:

$$S' = \widetilde{s}_1 \widetilde{s}_2 \tag{28.}$$

Altemative signal *S'* may be generated by selecting the appropriate term in the binomial expansion of $(s_1 + s_2)^{p+q}$ through the use of phase sensitive detection. Altemative signal *S'* would then be comprised of the sum, rather than the product, of two signals having frequencies *F* and $\nu$. Such a processing technique would prove advantageous for example if it were found useful to replace detectors 45,46 and dichroic beam splitter 80 in Figure 1 with a single detector.

it will further be appreciated by those skilled in the art that alternative additional optical elements and electronic processing steps may be incorporated into one of the disclosed embodiments of the apparatus of the present invention. For example, additional detectors and associated elements may be added to the embodiments to measure and compensate for the various phase offsets encountered In the data processing.

## Claims

1. An apparatus for measuring the effects of the refractive index of a gas in a measurement path, comprising:

a source (1, 4) of at least two light beams (11, 12) having different wavelengths;
an interferometer (60) having first (64) and second (66) measurement legs having optical paths structured and arranged such that at least one leg (66) has a variable physical length and at least one leg (66) is at least in part occupied by the gas, the optical path length difference between the first (64) and second (66) measurement legs varying in accordance with the difference between the respective physical lengths of their optical paths and the properties of the gas;
introduction means for introducing first and second predetermined portions of each of the light beams (11, 12) into the first (64) and second (66) measurement legs respectively so that each predetermined portion travels through the first (64) and second (66) measurement legs along predetermined optical paths with the same number of passes, the predetermined portions emerging from the interferometer (60) as exit beams (15) containing information about the respective optical path lengths through the first (64) and second (66) measurement legs at the wavelengths of the original beams (11, 12); and
mixing means (44) for combining the exit beams (15) to produce mixed optical signals containing information corresponding to the phase differences between each of the exit beams (15),

**characterized by** detecting means (80, 45, 46) arranged to detect the mixed optical signals and generating electrical interference signals ($s_1$ , $s_2$) containing information corresponding to the effects of the index of refraction of the gas at the different beam wavelengths and the difference in physical path lengths of the measurement legs (64, 66) and their relative rates of change; and

electronic means (981, 982, 983, 985, 986, 987) arranged to multiply said electrical interference signals ($s_1$ , $s_2$) by predetermined coefficients ($p_1$, $p_2$) and further process the multiplied signals and at least one of said electrical interference signals to determine the effects of the gas in the measurement leg(s) (64, 66) while compensating for the relative rates at which the physical path lengths of the first and second measurement legs (64, 66) are changing.

2. An apparatus according to claim 1 **characterized in that** the light beams (11, 12) have wavelengths having a substantial harmonic relationship and have orthogonal polarization states, and further **characterized in that** the introduction means comprises means (2, 5) for introducing a frequency difference between the orthogonal polarization states of each of the light beams (11, 12); means (9) for aligning the light beams (11, 12) into a single substantially collinear beam (13) along the same measurement path (66); means (23, 80) for producing phase shifted beams (16, 17) having phase shift magnitudes proportional to a product of the physical length of the measurement path (66) and the indices of refraction of the gas in the measurement path (66).

3. An apparatus according to claim 2 **characterized in that** the mixing means comprises means (44) for mixing the polarization components of each of the phase shifted beams (16, 17) for producing mixed output beams; and further **characterized in that** the detection means comprises means (45, 46) for producing heterodyne electrical signals ($s_1$ , $s_2$) from the intensities of the mixed output beams which comprise oscillations at heterodyne frequencies related to the frequency differences between the polarization states of the light beams and comprising heterodyne phases.

4. An apparatus according to claim 3 **characterized in that** the detecting means comprises means (981) for generating modified heterodyne signals $(\tilde{s}_1 , \tilde{s}_2)$ from the heterodyne electrical signals ($s_1$ , $s_2$) which comprise modified heterodyne frequencies harmonically related to said heterodyne frequencies and modified heterodyne phases harmonically related to said heterodyne phases; means (982) for mixing at least two of the modified heterodyne electrical signals $(\tilde{s}_1 , \tilde{s}_2)$ for producing at least one superheterodyne electrical signal (S) comprising a superheterodyne modulation frequency (F) substantially equal to half the difference of the two corresponding modified heterodyne frequencies $(\tilde{s}_1 , \tilde{s}_2)$ and a superheterodyne modulation phase substantially equal to half the difference between the two corresponding modified heterodyne phases; and means (983, 985, 986, 987) for analyzing the superheterodyne modulation phase for determining the fluctuations in the refractive index over the measurement path (66).

5. An apparatus according to claim 4 **characterized in that** the light beams (11, 12) each have two orthogonal polarization states, the frequency difference introducing means (2, 5) comprising means for introducing the frequency difference between the two orthogonal polarization states of each of the light beams, this frequency difference being different for the at least two beams.

6. An apparatus according to claim 4 or 5 **characterized in that** the means (9) for aligning the light beams comprises optical means for aligning all of the light beams into the single light beam (13).

7. An apparatus according to any one of claims 4 to 6 **characterized in that** the means (23, 80) for producing the phase shifted beams (16, 17) comprises means for introducing phase shifts between the polarization states of each of the light beams.

8. An apparatus according to any one of claims 4 to 7 **characterized in that** the means (23, 80) for producing the phase shifted beams comprises optical means.

9. An apparatus according to any one of claims 4 to 8 **characterized in that** the means (982) for mixing at least two of the modified heterodyne electrical signals $(\tilde{s}_1 , \tilde{s}_2)$ comprises means for mixing any two of the modified heterodyne electrical signals $(\tilde{s}_1 , \tilde{s}_2)$ for producing said at least one superheterodyne electrical signal (S) comprising the amplitude modulated carrier (C) having the superheterodyne modulation frequency (F).

**10.** An apparatus according to any one of the preceding claims **characterized in that** the source (1, 4) comprises a source of coherent radiation.

**11.** An apparatus according to any one of claims 4 to 9 **characterized in that** the means (981) for generating the modified heterodyne signals ($s_1$ , $s_2$) is electronic.

**12.** An apparatus according to any one of the preceding claims **characterized by** means (60b) for compensating for errors in the superheterodyne modulation phase produced by fluctuations in the wavelengths of the source (1, 4).

**13.** An apparatus according to claim 12 **characterized in that** the compensating means (60b) comprises an interferometer having a measurement path comprised of a monitor path (66b) of fixed length and a gas having a controlled refractive index.

**14.** An apparatus according to claim 12 or 13 **characterized in that** the compensation means (60b) further comprises means (45b, 46b) for producing monitor heterodyne signals, the producing means further comprising means (98b) for producing modified monitor heterodyne signals from the monitor heterodyne signals.

**15.** An apparatus according to any one of claims 12 to 14 **characterized in that** the means for producing the modified monitor heterodyne signals is electronic.

**16.** An apparatus according to any one of claims 12 to 15 **characterized in that** the compensation means (60b) further comprises means (98b) for mixing any two of the monitor modified heterodyne electrical signals for producing at least one monitor superheterodyne electrical signal comprising an amplitude modulated carrier having monitor superheterodyne modulation frequency.

**17.** A method for measuring the effects of the refractive index of a gas in a measurement path, comprising:

providing at least two light beams (11, 12) having differing wavelengths;
providing an interferometer (60) having first (64) and second (66) measurement legs having optical paths structured and arranged such that at least one leg (66) has a variable physical length and at least one leg (66) is at least in part occupied by the gas, the optical path length difference between the first (64) and second (66) measurement legs varying in accordance with the difference between the respective physical lengths of their optical paths and the properties of the gas;
introducing first and second predetermined portions of each of the light beams (11, 12) into the first (64) and second (66) measurement legs respectively so that each predetermined portion travels through the first (64) and second (66) measurement legs along predetermined optical paths with the same number of passes, the predetermined portions emerging from the interferometer (60) as exit beams (15) containing information about the respective optical path lengths through the first (64) and second (66) measurement legs at the wavelengths of the original beams (11, 12);
combining the exit beams (15) to produce mixed optical signals containing information corresponding to the phase differences between each of the exit beams (15),

**characterized by** detecting the mixed optical signals and generating electrical interference signals ($s_1$ , $s_2$) containing information corresponding to the effects of the index of refraction of the gas at the different beam wavelengths and the difference in physical path lengths of the measurement legs (64, 66) and their relative rate of change; and

electronically multiplying the electrical interference signals by predetermined coefficients and further processing the multiplied signals and at least one of said interference signals to determine the effects of the gas in the measurement leg(s) (64, 66) while compensating for the relative rates at which the physical path lengths of the first and second measurement legs (64, 66) are changing.

**18.** A method according to claim 17 **characterized in that** the light beams (11, 12) have wavelengths having a substantial harmonic relationship, and further **characterized by** providing modified heterodyne phase shifts based on the source wavelengths, the phase shifts being similarly harmonically related to the harmonically related wavelengths for providing a superheterodyne modulation phase substantially insensitive to motion along the measurement path (66) occupied at least in part by the gas.

**19.** A method according to claim 18 **characterized in that** the measurement path (66) comprises a measurement path in an interferometer having a stage (67) movable along the measurement path, the superheterodyne modulation phase providing step comprising providing the superheterodyne modulation phase substantially insensitive to stage (67) motion in the measurement path (66).

**20.** A method according to claim 18 or 19 **characterized by** determining a distance $L$ along the measurement path (66) independent of the fluctuations in the refractive index $n$.

**21.** A method according to claim 20 **characterized in that** the distance determining step determines the distance L in accordance with the equation

$$L = (\varphi_1 - p_1 \, \zeta_1)/p_1 k_1 n_1$$

where $\varphi_1$ equals the magnitude of the phase shift, $k_1$ equals the wavenumber of the phase shift, $n_1$ equals the refractive index and $\zeta_1$ equals the phase offset, the phase offset comprising all contributions to the phase shift $\varphi_1$ that are not related to the measurement path.

**22.** A method according to any one of claims 18 to 21 **characterized in that** each of the light beams (11, 12) have orthogonal polarization states and have a frequency difference between the orthogonal polarization states, and the step of providing the modified heterodyne phase shifts comprises producing heterodyne electrical signals which comprise oscillations at heterodyne frequencies related to frequency differences between polarization states of the source light beams, and generating modified heterodyne signals from the heterodyne electrical signals which comprise the modified heterodyne phase shifts.

**23.** A method according to claim 22 **characterized in that** the generating step comprises electronically generating the modified heterodyne signals, and electronically adding the modified heterodyne signals for producing a super-heterodyne signal comprising the superheterodyne modulation phase.

**24.** A method according to any one of claims 18 to 23 **characterized by** compensating for errors in the superheterodyne modulation phase produced by fluctuations in the source wavelengths.

**Patentansprüche**

**1.** Vorrichtung zum Messen des Einflusses des Brechungskoeffizienten eines Gases in einer Meßstrecke, mit:

einer Lichtquelle (1, 4) für mindestens zwei Lichtstrahlen (11, 12) unterschiedlicher Wellenlänge;
einem Interferometer (60) aufweisend erste (64) und zweite (66) Meßschenkel, deren Lichtwege derart angeordnet sind, dass mindestens ein Schenkel (66) eine geometrisch variable Länge aufweist und mindestens ein Schenkel (66) mindestens teilweise vom Gas umgeben ist, wobei der Lichtweg-Längenunterschied zwischen dem ersten (64) und zweiten (66) Meßschenkel abhängig vom physischen Längenunterschied zwischen den Lichtwegen sowie den Gaseigenschaften variiert;
Einfügemitteln zum Einblenden erster und zweiter vorgegebener Anteile jedes der Lichtstrahlen (11, 12) in den ersten (64) bzw. zweiten (66) Meßschenkel, so dass jeder der vorgegebenen Anteile entlang vorgegebener Strahlengänge mit der gleichen Durchlaufrate durch den ersten (64) und zweiten (66) Meßschenkel geführt wird und die vorgegebenen Anteile unter Beinhaltung von Informationen über die jeweiligen Lichtweglängen durch den ersten (64) und zweiten (66) Meßschenkel mit den Wellenlängen der ursprünglichen Strahlen (11, 12) als Ausgangsstrahlen (15) aus dem Interferometer (60) austreten; und
Mischmitteln (44) zum Kombinieren der Ausgangsstrahlen (15) zur Erzeugung optischer Mischsignale mit den der Phasendifferenz zwischen den jeweiligen Ausgangsstrahlen (15) entsprechenden Informationen,

**gekennzeichnet durch** Erfassungsmittel (80, 45, 46) zur Erkennung der optischen Mischsignale und Er-zeugung elektrischer Interferenzsignale ($s_1$, $s_2$) mit Informationen über den Einfluss des Brechungsindexes des Gases bei den verschiedenen Wellenlängen der Strahlen und den Streckenlängenunterschied der Meßschenkel (64, 66) sowie deren relative zeitliche Änderung; und

elektronischen Mitteln (981, 982, 983, 985, 986, 987) zur vielfachen Verstärkung besagter elektrischer Inter-

ferenzsignale ($s_1$ , $s_2$) mit vorgegebenen Koeffizienten ($p_1$, $p_2$) und Weiterverarbeitung der verstärkten Signale und mindestens eines der besagten elektrischen Interferenzsignale zur Ermittlung des Einflusses des Gases im jeweiligen Meßschenkel (64, 66) unter Ausgleich der relativen Änderungsrate der physischen Lichtweglängen der ersten und zweiten Meßschenkel (64, 66).

2. Vorrichtung nach Anspruch 1, **dadurch gekennzeichnet, dass** die Lichtstrahlen (11, 12) Wellenlängen starker harmonischer Beziehung sowie orthogonale Polarisationszustände aufweisen, und dass die Einfügemittel Mittel (2, 5) zur Erzeugung einer Frequenzdifferenz zwischen den orthogonalen Polarisationszuständen der einzelnen Lichtstrahlen (11, 12), Mittel (9) zum Bündeln der Lichtstrahlen (11, 12) in einen einzigen im wesentlichen kollinearen Strahl (13) entlang eines gemeinsamen Messwegs (66), sowie Mittel (23, 80) zur Bildung phasenverschobener Strahlen (16, 17) mit Phasenänderungsgrößen proportional zu einem Produkt der physischen Länge des Messwegs (66) und der Brechungsindizes des Gases im Messweg (66) enthalten.

3. Vorrichtung nach Anspruch 2, **dadurch gekennzeichnet, dass** die Mischmittel Mittel (44) zum Mischen der Polarisationskomponenten jedes der phasenverschobenen Strahlen (16, 17) zur Erzeugung gemischter Ausgangsstrahlen enthalten, und dass die Erfassungsmittel Mittel (45, 46) zur Erzeugung elektrischer Überlagerungssignale ($s_1$ , $s_2$) aus den Intensitäten der gemischten Ausgangsstrahlen mit aus den Frequenzdifferenzen zwischen den Polarisationszuständen der Lichtstrahlen abgeleiteten Schwingungen bei überlagerten Frequenzen sowie überlagerte Phasen enthalten.

4. Vorrichtung nach Anspruch 3, **dadurch gekennzeichnet, dass** die Erfassungsmittel Mittel (981) zur Erzeugung modifizierter, Überlagerungssignale $(\tilde{s}_1 , \tilde{s}_2)$ aus den harmonisch auf die besagten Überlagerungsfrequenzen bezogenen modifizierte Überlagerungsfrequenzen bzw. harmonisch auf die besagten Überlagerungsphasen bezogenen modifizierte Überlagerungsphasen enthaltende, elektrischen Überlagerungssignalen ($s_1$ , $s_2$) , Mittel (982) zum Mischen von mindestens zwei der modifizierten elektrischen Überlagerungssignale $(\tilde{s}_1 , \tilde{s}_2)$ zur Erzeugung mindestens eines elektrischen Überlagerungssignals ($S$) mit einer Überlagerungsmodulationsfrequenz ($F$), die im wesentlichen der halben Differenz der beiden modifizierten Überlagerungsfrequenzen $(\tilde{s}_1 , \tilde{s}_2)$ entspricht sowie mit einer Überlagerungsmodulationsphase die im wesentlichen der halben Differenz zwischen den beiden modifizierten Überlagerungsphasen entspricht, sowie Mittel (983, 985, 986, 987) zur Auswertung der Überlagerungsmodulationsphase zur Bestimmung der Schwankungen des Brechungsindexes entlang des Messwegs (66) aufweisen.

5. Vorrichtung nach Anspruch 4, **dadurch gekennzeichnet, dass** jeder der Lichtstrahlen (11, 12) zwei orthogonale Polarisationszustände aufweist, wobei die die Frequenzdifferenz erzeugenden Mittel (2, 5) weitere Mittel zum Einfügen der Frequenzdifferenz zwischen die beiden orthogonalen Polarisationszustände jedes der Lichtstrahlen enthalten und diese Frequenzdifferenz für die mindestens zwei Strahlen unterschiedlich ist.

6. Vorrichtung nach Anspruch 4 oder 5, **dadurch gekennzeichnet, dass** die Mittel (9) zum Ausrichten der Lichtstrahlen optische Mittel zum Bündeln aller Lichtstrahlen in einen einzelnen Lichtstrahl (13) umfassen.

7. Vorrichtung nach einem der Ansprüche 4 bis 6, **dadurch gekennzeichnet, dass** die Mittel (23, 80) zur Erzeugung der phasenverschobenen Strahlen (16, 17) Mittel zur Phasenänderung zwischen den Polarisationszuständen jedes der Lichtstrahlen umfassen.

8. Vorrichtung nach einem der Ansprüche 4 bis 7, **dadurch gekennzeichnet, dass** die Mittel (23, 80) zur Erzeugung der phasenverschobenen Strahlen optische Mittel enthalten.

9. Vorrichtung nach einem der Ansprüche 4 bis 8, **dadurch gekennzeichnet, dass** die Mittel (982) zum Mischen von mindestens zwei der modifizierten elektrischen Überlagerungssignale $(\tilde{s}_1 , \tilde{s}_2)$ Mittel zum Mischen jeglicher zwei modifizierter elektrischer Überlagerungssignale $(\tilde{s}_1 , \tilde{s}_2)$ zur Erzeugung des besagten mindestens einen elektrischen Überlagerungssignals ($S$) mit dem amplitudenmodulierten Träger ($C$) der überlagerten Modulationsfrequenz ($F$) umfassen.

10. Vorrichtung nach einem der vorhergehenden Ansprüche, **dadurch gekennzeichnet, dass** die Lichtquelle (1, 4) eine Quelle kohärenter Strahlung enthält.

11. Vorrichtung nach einem der Ansprüche 4 bis 9, **dadurch gekennzeichnet, dass** die Mittel (981) zur Erzeugung der modifizierten Überlagerungssignale $(\tilde{s}_1 , \tilde{s}_2)$ elektronischer Art sind.

**12.** Vorrichtung nach einem der vorhergehenden Ansprüche, **gekennzeichnet durch** Mittel (60b) zum Ausgleich in der überlagerten Modulationsphase **durch** Wellenlängenschwankungen der Lichtquelle (1, 4) verursachter Fehler.

**13.** Vorrichtung nach Anspruch 12, **dadurch gekennzeichnet, dass** die Ausgleichsmittel (60b) ein Interferometer mit einem Messweg bestehend aus einem Kontrollpfad (66b) fester Länge und einem Gas geregelten Brechungsindexes umfassen.

**14.** Vorrichtung nach Anspruch 12 oder 13, **dadurch gekennzeichnet, dass** die Ausgleichsmittel (60b) des weiteren Mittel (45b, 46b) zur Erzeugung von Überlagerungskontrollsignalen umfassen, wobei diese Erzeugungsmittel zusätzlich Mittel (98b) zur Erzeugung modifizierter Überlagerungskontrollsignale aus den Überlagerungskontrollsignalen enthalten.

**15.** Vorrichtung nach einem der Ansprüche 12 bis 14, **dadurch gekennzeichnet, dass** die Mittel zur Erzeugung der modifizierten Überlagerungskontrollsignale elektronischer Art sind.

**16.** Vorrichtung nach einem der Ansprüche 12 bis 15, **dadurch gekennzeichnet, dass** die Ausgleichsmittel (60b) des weiteren Mittel (98b) zum Mischen jeglicher zwei der modifizierten elektrischen Überlagerungskontrollsignale zur Erzeugung mindestens eines elektrischen Überlagerungskontrollsignals mit einem amplitudenmodulierten Träger einer Überlagerungsmodulationskontrollfrequenz umfassen.

**17.** Verfahren zum Messen des Einflusses des Brechungsindexes eines Gases in einer Meßstrecke, unter:

Bereitstellung mindestens zweier Lichtstrahlen (11, 12) unterschiedlicher Wellenlängen;
Bereitstellung eines Interferometers (60) aufweisend erste (64) und zweite (66) Meßschenkel, deren Lichtwege derart angeordnet sind, dass mindestens ein Schenkel (66) eine geometrisch variable Länge aufweist und mindestens ein Schenkel (66) mindestens teilweise vom Gas umgeben ist, wobei der Lichtweg-Längenunterschied zwischen dem ersten (64) und zweiten (66) Meßschenkel abhängig vom physischen Längenunterschied zwischen den Lichtwegen sowie den Gaseigenschaften variiert;
Einfügen erster und zweiter vorgegebener Anteile jedes der Lichtstrahlen (11, 12) in den ersten (64) bzw. zweiten (66) Meßschenkel, so dass jeder der vorgegebenen Anteile entlang vorgegebener Strahlengänge mit der gleichen Durchlaufrate durch den ersten (64) und zweiten (66) Meßschenkel geführt wird und die vorgegebenen Anteile unter Beinhaltung von Informationen über die jeweiligen Lichtweglängen durch den ersten (64) und zweiten (66) Meßschenkel mit den Wellenlängen der ursprünglichen Strahlen (11, 12) als Ausgangsstrahlen (15) aus dem Interferometer (60) austreten;
Zusammenlegung der Ausgangsstrahlen (15) zur Erzeugung optischer Mischsignale mit den der Phasendifferenz zwischen den jeweiligen Ausgangsstrahlen (15) entsprechenden Informationen,

**gekennzeichnet durch** die Erfassung der optischen Mischsignale zur Erzeugung elektrischer Interferenzsignale ($s_1$, $s_2$) mit Informationen über den Einfluss des Brechungsindexes des Gases bei verschiedenen Wellenlängen der Strahlen und den Streckenlängenunterschied der Meßschenkel (64, 66) sowie deren relativen zeitlichen Änderung; und

elektronische Vielfachverstärkung der elektrischen Interferenzsignale mit vorgegebenen Koeffizienten und Weiterverarbeitung der verstärkten Signale und mindestens eines der besagten Interferenzsignale zur Ermittlung des Einflusses des Gases im jeweiligen Meßschenkel (64, 66) unter Ausgleich der relativen Änderungsrate der physischen Lichtweglängen der ersten und zweiten Meßschenkel (64, 66).

**18.** Verfahren nach Anspruch 17, **gekennzeichnet durch** Lichtstrahlen (11, 12) mit Wellenlängen starker harmonischer Beziehung, sowie **durch** die Erzeugung modifizierter überlagerter Phasenänderungen ausgehend von den Quellwellenlängen, wobei für die Phasenänderungen eine ähnliche Oberwellenbeziehung zu den harmonisch bezogenen Wellenlängen besteht, um eine weitgehend auf Bewegungen im mindestens teilweise vom Gas belegten Messweg (66) unempfindliche Überlagerungsmodulationsphase zu erzeugen.

**19.** Verfahren nach Anspruch 18, **dadurch gekennzeichnet, dass** der Messweg (66) eine in einem Interferometer befindliche Meßstrecke mit einer entlang dieser Meßstrecke verfahrbaren Bühne (67) umfasst, wobei aufgrund eines die Überlagerungsmodulationsphase erzeugenden Vorgangs die Überlagerungsmodulationsphase weitgehend gegen eine Bewegung der Bühne (67) im Messweg (66) unempfindlich ist.

**20.** Verfahren nach Anspruch 18 oder 19, **gekennzeichnet durch** die Bestimmung einer Weglänge *L* entlang des Messwegs (66) unabhängig von Schwankungen des Brechungsindexes *n*.

**21.** Verfahren nach Anspruch 20, **dadurch gekennzeichnet, dass** die Ermittlung der Weglänge *L* auf Grundlage der Gleichung

$$L = (\varphi_1 - p_1\ \zeta_1)/p_1 k_1 n_1$$

erfolgt, wobei $\varphi_1$ für die Größe der Phasenänderung, $k_1$ für die Wellenzahl der Phasenänderung, $n_1$ für den Brechungsindex und $\zeta_1$ für die Phasenverschiebung steht und die Phasenverschiebung alle nicht messwegbezogenen Beiträge zur Phasenänderung $\varphi_1$ einbeschließt.

**22.** Verfahren nach einem der Ansprüche 18 bis 21, **dadurch gekennzeichnet, dass** jeder der Lichtstrahlen (11, 12) einen orthogonalen Polarisationszustand aufweist, dass zwischen den orthogonalen Polarisationszuständen eine Frequenzdifferenz besteht, dass der Vorgang der Erzeugung modifizierter Überlagerungsphasenänderungen die Erzeugung elektrischer Überlagerungssignale umfasst, wobei letztere Schwingungen bei Überlagerungsfrequenzen enthalten, die von Frequenzdifferenzen zwischen den Polarisationszuständen der Quellenlichtstrahlen abhängen, und dass aus den die modifizierten Überlagerungsphasenänderungen aufweisenden elektrischen Überlagerungssignalen modifizierte Überlagerungssignale erzeugt werden.

**23.** Verfahren nach Anspruch 22, **dadurch gekennzeichnet, dass** der Erzeugungsvorgang die elektronische Erzeugung der modifizierten Überlagerungssignale und die elektronische Hinzufügung der modifizierten Überlagerungssignale zur Erzeugung eines die Überlagerungs-Modulationsphase aufweisenden Überlagerungssignals beinhaltet.

**24.** Verfahren nach einem der Ansprüche 18 bis 23, **gekennzeichnet durch** den Ausgleich von **durch** Schwankungen in den Quellwellenlängen verursachten Fehlern in der Überlagerungsmodulationsphase.

**Revendications**

**1.** Un appareil pour mesurer les effets de l'indice de réfraction d'un gaz dans un trajet de mesure, comprenant :

une source (1, 4) d'au moins deux faisceaux de lumière (11, 12) ayant des longueurs d'onde différentes ;
un interféromètre (60) ayant une première (64) et une deuxième (66) sections de mesure ayant des trajets optiques structurés et disposés de telle façon qu'au moins une section (66) a une longueur physique variable et au moins une section (66) est occupée au moins en partie par le gaz, la différence des longueurs des trajets optiques entre la première (64) et la deuxième (66) sections de mesure variant selon la différence entre les longueurs physiques respectives de leurs trajets optiques et des propriétés du gaz ;
un moyen d'introduction pour introduire les première et deuxième portions prédéterminées de chacun des faisceaux de lumière (11, 12) respectivement dans les première (64) et deuxième (66) sections de mesure de telle façon que chaque portion prédéterminée voyage dans les première (64) et deuxième (66) sections de mesuré le long de trajets optiques prédéterminés avec le même nombre de passages, les portions prédéterminées émergeant de l'interféromètre (60) comme faisceaux de sortie (15) contenant des renseignements sur les longueurs des trajets optiques respectifs dans les première (64) et deuxième (66) sections de mesure aux longueurs d'onde des faisceaux originaux (11, 12) ; et
un moyen de mélange (44) pour combiner les faisceaux de sortie (15) pour produire des signaux optiques mixtes comprenant les renseignements correspondant aux différences de phases entre chacun des faisceaux de sortie (15),

**caractérisé par** des moyens de détection (80, 45, 46) conçus pour détecter les signaux optiques mixtes et générer des signaux d'interférence électrique ($s_1$, $s_2$) comprenant des renseignements correspondant aux effets de l'indice de réfaction du gaz aux différentes longueurs d'onde des faisceaux et la différence dans les longueurs de trajets physiques des sections de mesures (64, 66) et de leurs vitesses relatives de changement ; et

des moyens électroniques (981, 982, 983, 985, 986, 987) conçus pour multiplier lesdits signaux d'interférence électrique ($s_1$, $s_2$) par des coefficients prédéterminés ($p_1$, $p_2$) et traiter en outre les signaux multipliés et au moins un desdits signaux d'interférence électrique pour déterminer les effets du gaz dans la ou les section(s) de mesure (64, 65) tout en compensant pour les vitesses relatives auxquelles les longueurs des trajets physiques des première et seconde sections de mesure (64, 66) changent.

2. Un appareil selon la revendication 1, **caractérisé en ce que** les faisceaux de lumière (11, 12) ont des longueurs d'onde ayant une relation harmonique importante et ont des états de polarisation orthogonale, et **caractérisé en outre en ce que** les moyens d'introduction comprennent des moyens (2, 5) pour introduire une différence de fréquence entre les états de polarisation orthogonale de chacun des faisceaux de lumière (11, 12) ; un moyen (9) pour aligner les faisceaux de lumière (11, 12) en un faisceau simple essentiellement colinéaire (13) le long du même trajet de mesure (66) ; des moyens (23, 80) de produire des faisceaux déphasés (16, 17) ayant des intensités de déphasage proportionnelles au produit de la longueur physique du trajet de mesure (66) et des indices de réfraction du gaz dans le trajet de mesure (66).

3. Un appareil selon la revendication 2, **caractérisé en ce que** le moyen de mélange comprend un moyen (44) de mélanger les composants de polarisation de chacun des faisceaux déphasés (16, 17) pour produire des faisceaux de sortie mixtes ; et **caractérisé en outre en ce que** le moyen de détection comprend des moyens (45, 46) de produire des signaux électriques hétérodynes ($s_1$ , $s_2$) à partir des intensités des faisceaux de sortie mixtes qui comprennent les oscillations à des fréquences hétérodynes se rapportant aux différences de fréquences entre les états de polarisation des faisceaux de lumière et comprenant des phases hétérodynes.

4. Un appareil selon la revendication 3, **caractérisé en ce que** le moyen de détection comprend un moyen (981) de générer des signaux hétérodynes modifiés $(\tilde{s}_1 , \tilde{s}_2)$ à partir des signaux électriques hétérodynes ($s_1$ , $s_2$) qui comprennent des fréquences hétérodynes modifiées en relation harmonique avec lesdites fréquences hétérodynes et des phases hétérodynes modifiées en relation harmonique avec lesdites phases hétérodynes ; un moyen (982) de mélanger au moins deux des signaux électriques hétérodynes modifiés $(\tilde{s}_1 , \tilde{s}_2)$ pour produire au moins un signal électrique superhétérodyne (*S*) comprenant une fréquence de modulation superhétérodyne (*F*) essentiellement égale à la moitié de la différence des deux fréquences hétérodynes modifiées $(\tilde{s}_1 , \tilde{s}_2)$ et une phase de modulation superhétérodyne essentiellement égale à la moitié de la différence entre les deux phases hétérodynes modifiées correspondantes ; et des moyens (983, 985, 986, 987) d'analyser la phase de modulation superhétérodyne afin de déterminer les fluctuations de l'indice de réfraction sur le trajet de mesure (66).

5. Un appareil selon la revendication 4, **caractérisé en ce que** les faisceaux de lumière (11, 12) ont chacun deux états de polarisation orthogonale, la différence de fréquence introduisant des moyens (2, 5) comprenant des moyens d'introduire la différence de fréquence entre les deux états de polarisation orthogonale de chacun des faisceaux de lumière, cette différence de fréquence étant différente pour au moins deux faisceaux.

6. Un appareil selon la revendication 4 ou 5, **caractérisé en ce que** le moyen (9) pour aligner les faisceaux de lumière comprend des moyens optiques pour aligner tous les faisceaux de lumière en un faisceau unique de lumière (13).

7. Un appareil selon l'une quelconque des revendications 4 à 6, **caractérisé en ce que** les moyens (23, 80) de produire des faisceaux déphasés (16, 17) comprend des moyens d'introduction de déphasages entre les états de polarisation de chacun des faisceaux de lumière.

8. Un appareil selon l'une quelconque des revendications 4 à 7, **caractérisé en ce que** les moyens (23, 80) de produire des faisceaux déphasés comprennent des moyens optiques.

9. Un appareil selon l'une quelconque des revendications 4 à 8, **caractérisé en ce que** le moyen (982) de mélanger au moins deux des signaux électriques hétérodynes modifiés $(\tilde{s}_1 , \tilde{s}_2)$ comprend un moyen de mélanger au moins deux quelconques signaux électriques hétérodynes modifiés $(\tilde{s}_1 , \tilde{s}_2)$ pour mélanger au moins ledit signal électrique superhétérodyne (*S*) comprenant la porteuse modulée en amplitude (*C*) ayant la fréquence de modulation superhétérodyne (*F*).

10. Un appareil selon l'une quelconque des revendications précédentes, **caractérisé en ce que** la source (1, 4) comprend une source de rayonnement cohérent.

11. Un appareil selon l'une quelconque des revendications 4 à 9, **caractérisé en ce que** le moyen (981) de produire des signaux hétérodynes modifiés $(\tilde{s}_1 , \tilde{s}_2)$ est électronique.

**12.** Un appareil selon l'une quelconque des revendications précédentes, **caractérisé par** les moyens (60b) de compenser les erreurs de la phase de modulation superhétérodyne produites par les fluctuations dans les longueurs d'onde de la source (1, 4).

**13.** Un appareil selon la revendication 12, **caractérisé en ce que** le moyen de compensation (60b) comprend un interféromètre ayant un trajet de mesure comprenant un trajet de contrôle (66b) d'une longueur fixe et un gaz ayant un indice de réfraction constant.

**14.** Un appareil selon la revendication 12 ou 13, **caractérisé en ce que** le moyen de compensation (60b) comprend en outre des moyens (45b, 46b) de produire des signaux hétérodynes de contrôle, les moyens de production comprenant en outre un moyen (98b) de produire des signaux hétérodynes modifiés de contrôle à partir des signaux hétérodynes de contrôle.

**15.** Un appareil selon l'une quelconque des revendications 12 à 14, **caractérisé en ce que** le moyen de produire les signaux hétérodynes modifiés de contrôle est électronique.

**16.** Un appareil selon l'une quelconque des revendications 12 à 15, **caractérisé en ce** le moyen de compensation (60b) comprend en outre un moyen (98b) de mélanger deux quelconques signaux électriques hétérodynes modifiés de contrôle pour produire au moins un signal électrique superhétérodyne de contrôle comprenant une porteuse modulée en amplitude ayant une fréquence de modulation superhétérodyne de contrôle.

**17.** Une méthode pour mesurer les effets de l'indice de réfraction d'un gaz dans un trajet de mesure, comprenant :

la fourniture d'au moins deux faisceaux de lumière (11, 12) ayant des longueurs d'ondes différentes ;
la fourniture d'un interféromètre (60) ayant une première (64) et une deuxième (66) sections de mesure ayant des trajets optiques structurés et disposés de telle façon qu'au moins une section (66) a une longueur physique variable et au moins une section (66) est occupée au moins en partie par le gaz, la différence des longueurs des trajets optiques entre la première (64) et la deuxième (66) sections de mesure variant selon la différence entre les longueurs physiques respectives de leurs trajets optiques et des propriétés du gaz ;
l'introduction d'une première et d'une deuxième portions prédéterminées de chacun des faisceaux de lumière (11, 12) dans les première (64) et deuxième (66) sections de mesure respectivement, de telle façon que chaque portion prédéterminée voyage dans les première (64) et deuxième (66) sections de mesure le long de trajets optiques prédéterminés avec le même nombre de passages, les portions prédéterminées émergeant de l'interféromètre (60) comme faisceaux de sortie (15) comprenant des renseignements sur les longueurs des trajets optiques respectifs dans les première (64) et deuxième (66) sections de mesure aux longueurs d'onde des faisceaux originaux (11, 12) ;
le mélange des faisceaux de sortie (15) pour produire des signaux optiques mixtes comprenant les renseignements correspondant aux différences de phases entre chacun des faisceaux de sortie (15),

**caractérisée par** la détection des signaux optiques mixtes et la génération de signaux d'interférence électrique ($s_1$, $s_2$) comprenant des renseignements correspondant aux effets de l'indice de réfaction du gaz à différentes longueurs d'onde des faisceaux et la différence dans les longueurs de trajets physiques des sections de mesure (64, 66) et de leurs vitesses relatives de changement ; et

la multiplication de façon électronique desdits signaux d'interférence électrique par des coefficients prédéterminés et le traitement en outre des signaux multipliés et d'au moins un desdits signaux d'interférence pour déterminer les effets du gaz dans la(es) section(s) de mesure (64, 65) tout en compensant les vitesses relatives auxquelles les longueurs des trajets physiques des première et seconde sections de mesure (64, 66) changent.

**18.** Une méthode selon la revendication 17, **caractérisée en ce que** les faisceaux de lumière (11, 12) ont des longueurs d'onde ayant une relation harmonique importante, et **caractérisée en outre par** la fourniture de déphasages hétérodynes modifiés basés sur les longueurs d'onde des sources, les déphasages étant en relation harmonique de façon similaire aux longueurs d'ondes en relation harmonique pour fournir une phase de modulation superhétérodyne essentiellement insensible au mouvement le long du trajet de mesure (66) occupé au moins en partie par le gaz.

**19.** Une méthode selon la revendication 18, **caractérisée en ce que** le trajet de mesure (66) comprend un trajet de mesure dans un interféromètre ayant un stade (67) mobile le long du trajet de mesure, la phase de modulation superhétérodyne fournissant une étape comprenant la fourniture d'une phase de modulation superhétérodyne essentiellement insensible au déplacement du stade (67) dans le trajet de mesure (66).

20. Une méthode selon la revendication 18 ou 19, **caractérisée par** la détermination d'une distance $L$ le long du trajet de mesure (66) indépendamment des fluctuations de l'indice de réfraction $n$.

21. Une méthode selon la revendication 20, **caractérisée en ce que** l'étape de détermination de la distance détermine la distance $L$ selon l'équation :

$$L = (\varphi_1 - p_1\ \zeta_1)/p_1 k_1 n_1$$

où $\varphi_1$ représente l'importance du déphasage, $k_1$ représente le nombre d'onde du déphasage, $n_1$ représente l'indice de réfraction et $\zeta_1$ représente le décalage de phase, le décalage de phase comprenant toutes les contributions au déphasage $\varphi_1$ qui ne se rapportent pas au trajet de mesure.

22. Une méthode selon l'une quelconque des revendications 18 à 21, **caractérisée en ce que** chaque faisceau de lumière (11, 12) a des états de polarisation orthogonale et présente une différence de fréquence entre les états de polarisation orthogonale, et l'étape de fourniture des déphasages hétérodynes modifiés comprend la production de signaux électriques hétérodynes qui comprennent des oscillations aux fréquences hétérodynes reliées aux différences de fréquence entre les états de polarisation des faisceaux de lumière des sources, et qui génèrent des signaux hétérodynes modifiés à partir des signaux électriques hétérodynes qui comprennent les déphasages hétérodynes modifiés.

23. Une méthode selon la revendication 22, **caractérisée en ce que** l'étape de génération comprend la génération électronique de signaux hétérodynes modifiés, et l'ajout électronique de signaux hétérodynes modifiés pour la production d'un signal superhétérodyne comprenant la phase de modulation superhétérodyne.

24. Une méthode selon l'une quelconque des revendications 18 à 23, **caractérisée par** la compensation des erreurs dans la phase de modulation superhétérodyne produites par les fluctuations dans les longueurs d'onde de la source.

Figure 1

Figure 2

Figure 3

Figure 4